# EUROPEAN PATENT SPECIFICATION

(11) **EP 4 654 387 B1**
(45) Date of publication and mention of the grant of the patent: **17.06.2026**
(21) Application number: 25175390.1
(22) Date of filing: 09.05.2025
(51) Int. Cl.: H01R 4/20, H01R 4/70, H01R 11/05, H01R 13/04

(54) **TERMINAL WATERPROOF STRUCTURE**
WASSERDICHTE KONTAKTKLEMMENSTRUKTUR
STRUCTURE DE BORNE ÉTANCHE

(30) Priority: 21.05.2024 JP 2024082635
(43) Date of publication of application: 26.11.2025
(73) Proprietor: Yazaki Corporation, Tokyo 108-0075 (JP)
(72) Inventor: Deno, Masahiro, Kakegawa-shi, Shizuoka, 437-1421 (JP); Hondo, Hidetaka, Sagamihara-shi, Kanagawa, 252-0231 (JP); Miyazaki, Yasutaka, Kakegawa-shi, Shizuoka, 437-1421 (JP)
(74) Representative: Grünecker Patent- und Rechtsanwälte PartG mbB

(56) References cited:
- EP-A1- 3 364 503
- DE-A1- 10 202 102
- JP-A- 2001 110 464

## Description

### TECHNICAL FIELD

The present invention relates to a terminal waterproof structure.

### BACKGROUND

Hitherto, a charging system including a charging connector and a charging port (charging inlet) has been used to supply power (charge) from outside a vehicle to a battery installed in the vehicle such as an electric automobile and a plug-in hybrid automobile (see JP 2017-220355 A). In the charging inlet described in JP 2017-220355 A, terminals such as a power terminal and a signal terminal are accommodated in a housing, electric wires connected to the terminals are drawn out rearward from the housing, and a retainer collectively prevents those terminals from coming loose. From document JP 2001 110464 A it is known a terminal waterproof structure according to the preamble portion of claim 1. Further prior art is known from documents DE 102 02 102 A and EP 3 364 503 A1.

### SUMMARY OF THE INVENTION

For example, in a charging system in a vehicle such as an electric automobile and a plug-in hybrid automobile, waterproof performance is required to prevent rainwater or the like from infiltrating an inside of a terminal. However, a general terminal waterproof structure (waterproof crimp terminal) in the related art requires processes such as wrapping a connecting point between a terminal and an electric wire with tape or covering the connecting point between the terminal and the electric wire with a heat-shrinkable tube and applying heat thereto.

An object of the present invention is to provide a terminal waterproof structure that can improve waterproof performance without using a heat-shrinkable tube or the like.

A terminal waterproof structure according to the present invention includes the features of claim 1.

According to the above-mentioned configuration, it is possible to provide a terminal waterproof structure that can improve waterproof performance without using a heat-shrinkable tube or the like.

### BRIEF DESCRIPTION OF THE DRAWINGS

Fig. 1 is an exploded perspective view of a connector to which a terminal waterproof structure according to the present embodiment is applied.
Fig. 2 is a perspective view illustrating an example of the terminal waterproof structure according to the present embodiment.
Fig. 3 is a side cross-sectional view of the terminal waterproof structure according to the present embodiment.
Fig. 4 is a perspective view of a terminal forming the terminal waterproof structure.
Fig. 5 is a side cross-sectional view of the terminal forming the terminal waterproof structure.

### DETAILED DESCRIPTION OF THE INVENTION

With reference to the drawings, a terminal waterproof structure according to the present embodiment is described below in detail. Note that the dimensional ratios in the drawings are exaggerated for explanatory purposes, and may differ from the actual ratios.

The terminal waterproof structure (waterproof crimp terminal) according to the present embodiment is applicable to a charging connector used for charging a battery installed in a vehicle, a charging inlet arranged in a charging port in a vehicle, or the like.

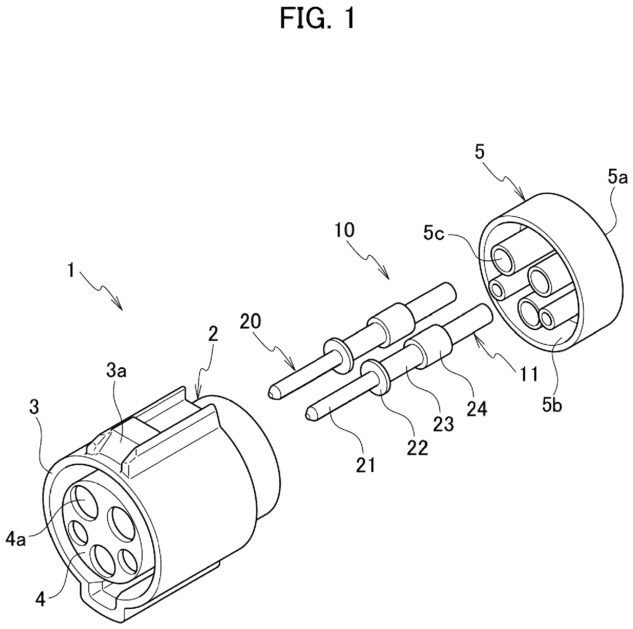

As illustrated in Fig. 1, a connector 1 according to the present embodiment is a charging inlet arranged in a charging port in a vehicle to charge a battery installed in the vehicle. The connector 1 is configured to be fitted with a charging connector (omitted in illustration) provided with a mating terminal (omitted in illustration).

The connector 1 includes a connector housing 2 in which a plurality of terminals 20 are provided and an exterior hood 3 that covers the periphery of the connector housing 2.

The connector housing 2 is configured to include a front housing 4 that is arranged in the exterior hood 3 and is formed of a resin and a terminal holder 5 that is attached to the rear portion of the front housing 4 and is formed of a resin.

The front housing 4 is formed integrally with the exterior hood 3. In the front housing 4, a plurality of terminal accommodation chambers 4a that accommodate the plurality of terminals 20 are formed. Meanwhile, the exterior hood 3 is provided with a locking portion 3a that maintains fitting with the mating terminal (omitted in illustration).

For example, the terminal holder 5 includes a holder main portion 5a that is formed to have a disc-like shape and a holder tube portion 5b that protrudes from the holder main portion 5a toward the front housing and is formed to have a tubular shape. The holder tube portion 5b is formed integrally with the holder main portion 5a.

The holder main portion 5a is provided with a plurality of terminal supporting portions 5c that are provided on an insertion side of a mating connector (omitted in illustration) and support a plurality of terminals. For example, the terminal supporting portion 5c is formed to have a tubular shape, and each terminal supported by the terminal supporting portion 5c is configured by a charging terminal, a signal terminal, an earth terminal, or the like. Further, the terminal supporting portion 5c is formed integrally with the holder main portion 5a.

The connector 1 according to the present embodiment includes a terminal waterproof structure 10.

As illustrated in Fig. 1 to Fig. 3, the terminal waterproof structure 10 according to the present embodiment includes an electric wire 11 and the terminal 20.

The electric wire 11 includes a conductive core wire 12 and an insulating coating 13 that coats the core wire 12. For example, the core wire 12 is configured by bundling a plurality of metal element wires formed of a metal material, such as cupper, having conductivity. The insulating coating 13 is removed at the end portion of the electric wire 11, and the core wire 12 is exposed. The core wire 12 being exposed is crimped to the terminal 20.

The terminal 20 formed of metal (for example, copper) is accommodated in the terminal accommodation chamber 4a. The terminal 20 is also referred to as a crimp terminal. The terminal 20 includes a terminal connecting portion 21 that is formed at the front end portion of the terminal 20 and is electrically connected to the mating terminal (omitted in illustration), and an electric wire connecting portion 23 that is electrically connected to the electric wire 11. Further, the terminal 20 includes a terminal waterproof portion 24 that is formed at the rear end portion of the terminal 20. Moreover, the terminal 20 may include a retaining portion (a flange portion 22) that is provided between the terminal connecting portion 21 and the electric wire connecting portion 23 and is retained in the front housing 4.

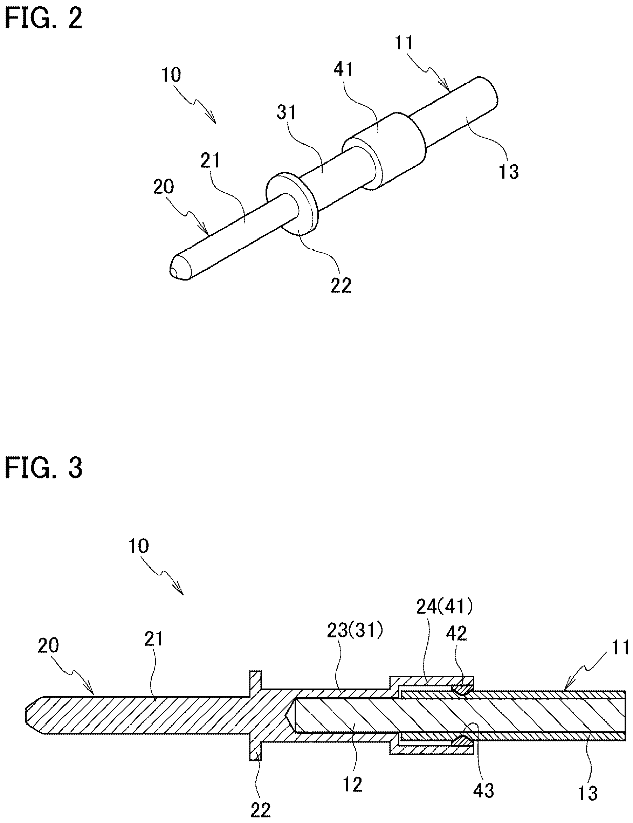

As illustrated in Fig. 2 to Fig. 5, the electric wire connecting portion 23 includes a first barrel portion 31 formed to have a tubular shape. The core wire 12 of the electric wire 11 is inserted (press-fitted) into a hole portion of the first barrel portion 31. A core wire clamping portion (omitted in illustration) may be formed by, for example, vertical pressing under a state in which the core wire 12 of the electric wire 11 is inserted (press-fitted) into the hole portion of the first barrel portion 31. Further, the method of forming the core wire clamping portion is not limited to vertical pressing.

As illustrated in Fig. 2 to Fig. 5, the terminal waterproof portion 24 includes a second barrel portion 41 formed to have a tubular shape. A packing 42 is inserted into a hole portion of the hole portion of the second barrel portion 41. The packing 42 functions as a sealing member that seals the space between the outer circumference of the insulating coating 13 of the electric wire 11 and the inner circumference of the second barrel portion 41. The packing 42 is formed to have an annular shape. On the inner circumference of the packing 42, a protruding portion 43 is formed to extend in the circumferential direction of the terminal 20. The protruding portion 43 is provided over the entire circumference of the terminal waterproof portion 24 (the second barrel portion 41). Further, the protruding portion 43 bites into (comes into) the insulating coating 13.

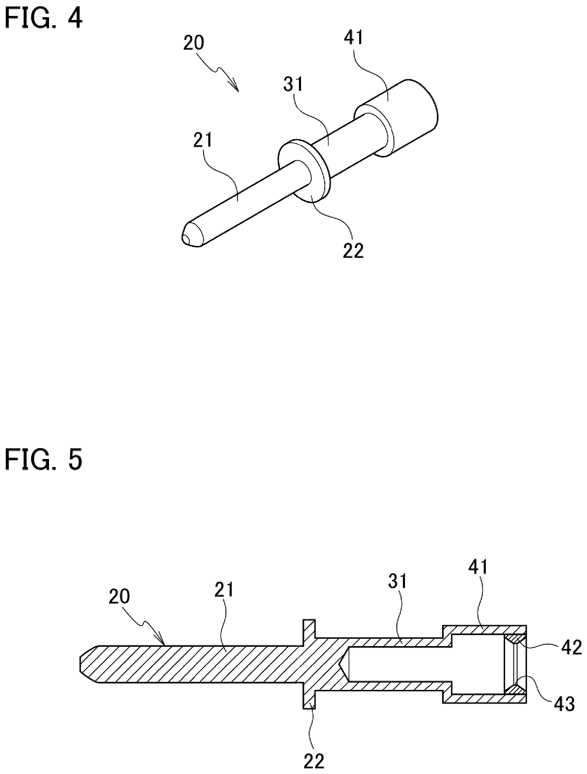

As illustrated in Fig. 5, under a state in which the packing 42 is inserted into the hole portion of the second barrel portion 41 in advance, the insulating coating 13 of the electric wire 11 is inserted. With this, the terminal waterproof portion 24 is formed. Further, under a state in which the packing 42 is attached to the insulating coating 13 of the electric wire 11 in advance, the packing 42 may be inserted (press-fitted) into the hole portion of the second barrel portion 41 together with the electric wire 11.

As described above, the terminal waterproof structure 10 according to an aspect of the present embodiment includes the electric wire 11 including the core wire 12 and the insulating coating 13 and the terminal 20 attached to the terminal end portion of the electric wire 11. The terminal 20 includes the terminal connecting portion 21 that is formed at the front end portion of the terminal 20 and is electrically connected to the mating terminal, and the electric wire connecting portion 23 in which the core wire 12 exposed from the insulating coating 13 is arranged, the electric wire connecting portion 23 being formed to have a tubular shape on the rear end side of the terminal 20. The terminal 20 includes the terminal waterproof portion 24 in which the insulating coating 13 is arranged. The terminal waterproof portion 24 is adjacent to the electric wire connecting portion 23, and is formed to have a tubular shape at the rear end portion of the terminal 20. The sealing member (the packing 42) that seals the space between the circumference of the insulating coating 13 and the inner circumference of the terminal waterproof portion 24 is arranged on the inner circumference of the terminal waterproof portion 24.

In the present embodiment, the core wire 12 is inserted into the electric wire connecting portion 23 of the terminal 20, the insulating coating 13 is inserted into the terminal waterproof portion 24, and the sealing member (the packing 42) is arranged on the inner circumference of the terminal waterproof portion 24. With this, the terminal waterproof structure 10 is obtained.

According to the present embodiment described above, it is possible to provide the terminal waterproof structure 10 that can improve waterproof performance without using a heat-shrinkable tube or the like.

In the terminal waterproof structure 10, the protruding portion 43 may be formed on the sealing member (the packing 42). The protruding portion 43 may extend along the circumferential direction, and may have an annular shape.

The sealing member (the packing 42) is thus configured. With this, the space between the outer circumference of the insulating coating 13 of the electric wire 11 and the inner circumference of the terminal waterproof portion 24 (the second barrel portion 41) can be sealed in a watertight manner. Consequently, waterproof performance of the terminal waterproof structure 10 can be improved more.

In the terminal waterproof structure 10, the protruding portion 43 may bite into the insulating coating 13.

The protruding portion 43 on the inner circumference of the sealing member (the packing 42) is thus formed. With this, the space between the outer circumference of the insulating coating 13 of the electric wire 11 and the inner circumference of the terminal waterproof portion 24 (the second barrel portion 41) can be sealed in a watertight manner. Consequently, waterproof performance of the terminal waterproof structure 10 can be improved more.

## Claims

1. A terminal waterproof structure (10), comprising:
an electric wire (11) including a core wire (12) and an insulating coating (13); and
a terminal (20) attached to a terminal end portion of the electric wire (11), wherein
the terminal (20) includes:
a terminal connecting portion (21) being formed at a front end portion of the terminal (20) and configured to be electrically connected to a mating terminal;
an electric wire connecting portion (23) in which the core wire (12) exposed from the insulating coating (13) is arranged, the electric wire connecting portion (23) being formed to have a tubular shape on a rear end side of the terminal (20); and
a terminal waterproof portion (24) in which the insulating coating (13) is arranged, the terminal waterproof portion (24) being adjacent to the electric wire connecting portion (23) and being formed to have a tubular shape at a rear end portion of the terminal (20), and
a sealing member (42) configured to seal a space between an outer circumference of the insulating coating (13) and an inner circumference of the terminal waterproof portion (24) is arranged on an inner circumference of the terminal waterproof portion (24),
a protruding portion (43) is formed on an inner circumference of the sealing member (42), the protruding portion (43) extending along a circumferential direction and having an annular shape,
**characterized in that**
the protruding portion (43) bites into the insulating coating (13).

## Patentansprüche

1. Anschluss-Wasserdichtigkeitsstruktur (10), die umfasst:
einen elektrischen Draht (11), der einen Kerndraht (12) und eine isolierende Umhüllung (13) enthält; sowie
einen Anschluss (20), der an einem Anschluss-Endabschnitt des elektrischen Drahtes (11) angebracht ist, wobei der Anschluss (20) enthält:
einen Anschluss-Verbindungsabschnitt (21), der an einem vorderen Endabschnitt des Anschlusses (20) ausgebildet und zum elektrischen Verbinden mit einem Gegenanschluss ausgeführt ist;
einen Abschnitt (23) zum Verbinden des elektrischen Drahtes, in dem der aus der isolierenden Umhüllung (13) freigelegte Kerndraht (12) angeordnet ist, wobei der Abschnitt (23) zum Verbinden des elektrischen Drahtes so ausgebildet ist, dass er eine Röhrenform an einer hinteren Endseite des Anschlusses (20) hat; und
einen Wasserdichtigkeits-Anschlussabschnitt (24), in dem die isolierende Umhüllung (13) angeordnet ist, wobei der Wasserdichtigkeits-Anschlussabschnitt (24) an den Abschnitt (23) zum Verbinden des elektrischen Drahtes angrenzt und so ausgebildet ist, dass er eine Röhrenform an einem hinteren Endabschnitt des Anschlusses (20) hat; und
ein Dichtungselement (42), das so ausgeführt ist, dass es einen Raum zwischen einem Außenumfang der isolierenden Umhüllung (13) und einem Innenumfang des Wasserdichtigkeits-Anschlussabschnitts (24) abdichtet, an einem Innenumfang des Wasserdichtigkeits-Anschlussabschnitts (24) angeordnet ist,
ein vorstehender Abschnitt (43) an einem Innenumfang des Dichtungselementes (42) ausgebildet ist, wobei sich der vorstehende Abschnitt (43) in einer Umfangsrichtung erstreckt und eine Ringform hat,
**dadurch gekennzeichnet, dass**
der vorstehende Abschnitt (43) in die isolierende Umhüllung (13) einschneidet.

## Revendications

1. Structure de borne étanche (10), comprenant :
un fil électrique (11) comprenant un fil d'âme (12) et un revêtement isolant (13) ; et
une borne (20) fixée à une portion d'extrémité de borne du fil électrique (11), dans laquelle la borne (20) comporte :
une portion de connexion de borne (21) formée au niveau d'une portion d'extrémité avant de la borne (20) et configurée pour être électriquement connectée à une borne homologue ;
une portion de connexion de fil électrique (23) dans laquelle est disposé le fil d'âme (12) exposé depuis le revêtement isolant (13), la portion de connexion de fil électrique (23) étant formée en forme tubulaire sur un côté d'extrémité arrière de la borne (20) ; et
une portion étanche de borne (24) dans laquelle est disposé le revêtement isolant (13), la portion étanche de borne (24) étant adjacente à la portion de connexion de fil électrique (23) et étant formée en forme tubulaire au niveau d'une portion d'extrémité arrière de la borne (20), et
un organe d'étanchéité (42), configuré pour étanchéifier un espace entre une circonférence externe du revêtement isolant (13) et une circonférence interne de la portion étanche de borne (24), est disposé sur une circonférence interne de la portion étanche de borne (24),
une portion en saillie (43) est formée sur une circonférence interne de l'organe d'étanchéité (42), la portion en saillie (43) s'étendant le long d'une direction circonférentielle et ayant une forme annulaire,
**caractérisée en ce que**
la portion en saillie (43) mord dans le revêtement isolant (13).
